# EUROPÄISCHE PATENTSCHRIFT

(11) **EP 2 415 338 B1**
(45) Veröffentlichungstag und Bekanntmachung des Hinweises auf die Patenterteilung: **26.06.2013**
(21) Anmeldenummer: 11006322.9
(22) Anmeldetag: 01.08.2011
(51) Int. Cl.: A01C 17/00

(54) **Verfahren zur gleichmässigen Verteilung von Mineraldünger an Hanglagen**
Method for equal distribution of mineral fertiliser to slopes
Procédé de répartition homogène d'engrais minéraux sur des coteaux

(30) Priorität: 07.08.2010 DE 102010034215
(43) Veröffentlichungstag der Anmeldung: 08.02.2012
(73) Patentinhaber: RAUCH Landmaschinenfabrik GmbH, 76547 Sinzheim (DE)
(72) Erfinder: Rauch, Norbert Dr., 76547 Sinzheim (DE); Stöcklin, Volker, 77975 Ringsheim (DE)
(74) Vertreter: Lasch, Hartmut

(56) Entgegenhaltungen:
- EP-A1- 1 068 784
- EP-A1- 1 088 475
- EP-A2- 0 537 857
- DE-A1- 10 145 927
- DE-A1- 19 626 348

## Beschreibung

Die Erfindung betrifft ein Verfahren zur gleichmäßigen Verteilung von Mineraldünger an Hanglagen mittels eines Zweischeibenstreuers mit gesteuerten Einrichtungen zur Änderung des Aufgabepunktes des Düngers auf die umlaufenden Verteilerscheiben.

Eine gleichmäßige Düngerverteilung mittels Zweischeibenstreuern ist in der Ebene im Fahrgassenbetrieb mit einer definierten Überlappung der Streufächer problemlos möglich. Grundlage ist die halbkreisförmige Düngerablage, bei der die Düngermenge innerhalb des Halbkreises von der Mittel zu den Randzonen abnimmt. Beim Anschlussfahren erfolgt eine entsprechend von innen nach außen abnehmende Düngerablage, so dass sich diese in der Überlappungszone zu einer gleichmäßigen Düngerverteilung ergänzen.

Für die Streubreite und damit für die Arbeitsbreite ist unter anderem der Aufgabepunkt des Düngers auf die Verteilerscheiben maßgeblich. Aus diesem Grund lässt sich bei modernen Zweischeibenstreuern der Aufgabepunkt gesteuert verlagern (DE 10 2007 053 550 A1).

Weitgehend ungelöst ist bis heute das Problem der gleichmäßigen Düngerverteilung auf Hanglagen. Im Rahmen der Nutzung auch schwieriger landwirtschaftlicher Flächen, besteht folglich ein Bedarf am gleichmäßigen Streuen von Hangflächen. Das Problem liegt vornehmlich darin, dass bei einer Fahrt des Zweischeibenstreuers am geneigten Hang der Dünger aufgrund der Schwerkraft nicht wie beim Streuen in der Ebene an der gleichen Stelle auf die Verteilerscheibe trifft. Der daraus resultierende Streufehler ist umso größer, je größer die Fallhöhe des Düngers zwischen dem an das Dosierorgan anschließenden oberen Beginn des Auslaufschachts und der Scheibenfläche und je größer die Neigungslage des Streuers ist.

Mit einer bekannten konstruktiven Lösung (DE 10 2008 023 548 A1) wird die Fallhöhe des Düngers dadurch minimiert, dass die Schieberdosierung des Dosierorgans und der Auslaufschacht unmittelbar oberhalb des Umlaufkreises der Wurfflügel auf der Verteilerscheibe enden. Es verbleibt jedoch ein Fehlereinfluss für die Veränderung der Düngerverteilung, der sich wenigstens aus der Höhe der Wurfflügel ergibt.

Es ist weiterhin ein Zweischeibenstreuer für das Hangstreuen bekannt (DE 101 45 927 A1), bei dem der Streuer entsprechend der Neigungslage des Hangs eingestellt wird. Es ist zudem eine Verlagerung des Aufgabepunktes vorgesehen. Die Druckschrift beschreibt jedoch nicht, in welcher Weise eine Aufgabepunktverlagerung erfolgt.

Aufgabe der Erfindung ist es, bei der Fahrt entlang eines Hangs -Querhangfahrt - wie auch bei der Fahrt hangaufwärts oder hangabwärts eine möglichst ähnlich gute Düngerverteilung wie beim Streuen in der Ebene zu verwirklichen.

Diese Aufgabe wird erfindungsgemäß dadurch gelöst, dass gegenüber der düngersorten- und arbeitsbreitenabhängigen Einstellung des Aufgabepunktes beim Streuen in der Ebene bei der Hangaufwärts- und bei der Hangabwärtsfahrt die Aufgabepunkte rechts und links gleichsinnig verlagert werden und bei der Fahrt entlang des Hangs - der Querhangfahrt - die Aufgabepunkte rechts und links gegensinnig verlagert werden.

Im Gegensatz zu der bekannten konstruktiven Lösung greift die Erfindung an der Ursache für die Problematik beim Hangstreuen ein und liefert sowohl für die Querhangfahrt, als auch für die Fahrt hangaufwärts und hangabwärts eine die schwerkraftbedingte Verlagerung der Aufgabepunkte gegenüber dem Streubetrieb in der Ebene kompensierende Lösung.

Für die Durchführung des erfindungsgemäßen Verfahrens ist insbesondere die maschinengesteuerte Verlagerung der Aufgabepunkte gemäß der DE 10 2007 053 550 A1 geeignet.

Es zeichnet sich daher eine bevorzugte Ausführungsform des Verfahrens dadurch aus, dass bei einem Zweischeibenstreuer mit einer Drehrichtung der Verteilerscheiben in der Mitte zwischen den Scheiben gegen die Fahrtrichtung die schwerkraftbedingte Verlagerung des Aufgabepunktes gegen die Drehrichtung der Verteilerscheiben und/oder nach außen in Richtung Scheibenumfang bei der Hangabwärtsfahrt durch die maschinengesteuerte Verlagerung der Aufgabepunkte gleichsinnig in Drehrichtung und/oder nach innen in Richtung Scheibenmitte ausgeglichen wird.

Eine weitere bevorzugte Ausführungsform des Verfahrens zeichnet sich dadurch aus, dass bei einem Zweischeibenstreuer mit einer Drehrichtung der Verteilerscheibe in der Mitte zwischen den Scheiben gegen die Fahrtrichtung die schwerkraftbedingte Verlagerung der Aufgabepunkte in Drehrichtung der Verteilerscheiben und/oder nach innen in Richtung Scheibenmitte bei der Hangaufwärtsfahrt durch die maschinengesteuerte Verlagerung der Aufgabepunkte gleichsinnig gegen die Drehrichtung und/oder nach außen in Richtung Scheibenumfang ausgeglichen wird.

Die beiden Ausführungsformen liefern für die Fahrt hangaufwärts und hangabwärts eine Lösung, um die schwerkraftbedingte Ablenkung des anstrebenden Düngerstrahls in seiner Auswirkung auf die Verteilung des Düngers zu kompensieren.

Bei der Querhangfahrt ist gemäß einer bevorzugten Ausführungsform vorgesehen, dass bei einem Zweischeibenstreuer mit einer Drehrichtung der Verteilerscheiben in der Mitte der Scheiben gegen die Fahrtrichtung die schwerkraftbedingte Verlagerung der Aufgabepunkte bei der Querhangfahrt durch die maschinengesteuerte Verlagerung der Aufgabepunkte der beiden Seiten gegensinnig erfolgt und der Aufgabepunkt der hangoberen Seite in Drehrichtung und/oder nach innen in Richtung Scheibenmitte und der Aufgabepunkt der hangunteren Seite gegen die Drehrichtung und/oder nach außen in Richtung Scheibenumfang maschinengesteuert verlagert wird. Damit ist auch bei der Querhangfahrt gewährleistet, dass die schwerkraftbedingte Ablenkung des austretenden Düngerstrahls keinen negativen Einfluss auf die Düngerverteilung am Hang hat.

Bei einem anderen Typ von Zweischeibenstreuern mit einer Drehrichtung der Verteilerscheiben in der Mitte zwischen den Scheiben in Fahrtrichtung werden die drei vorgenannten Ausführungsformen des Verfahrens zur Verlagerung der Aufgabepunkte in analoger Umkehrung vorgenommen.

In einer vorteilhaften Ausgestaltung der Erfindung ist vorgesehen, dass die Neigung des Hangs quer zur Fahrtrichtung mittels eines Winkelmessers messtechnisch erfasst wird.

Der gemessene Winkel wird in der Maschinensteuerung der Aufgabepunktverlagerung bei der Querhangfahrt entsprechend berücksichtigt, insbesondere werden die beiden maschinengesteuerten Aufgabepunkte in Abhängigkeit vom gemessenen Winkel entsprechend gegensinnig quantitativ verändert.

In einer weiteren vorteilhaften Ausgestaltung ist vorgesehen, dass die Neigung des Hangs in Fahrtrichtung mittels eines Winkelmessers messtechnisch erfasst wird.

Auch in diesem Fall wird der gemessene Winkel in der Maschinensteuerung der Aufgabepunkte bei der Fahrt hangaufwärts bzw. hangabwärts berücksichtigt, insbesondere werden die maschinengesteuerten Aufgabepunkte entsprechend gleichsinnig quantitativ geändert.

In einer weiteren vorteilhaften Ausgestaltung kann vorgesehen sein, die Lage der Maschine zur Ebene über Beschleunigungsmessung in den 3 Raumachsen oder mittels eines Gyrosensors zu bestimmen.

Vorteilhafterweise ist vorgesehen, dass die maschinengesteuerten Aufgabepunktverlagerungen quer und in Fahrtrichtung abhängig von den jeweils gemessenen Winkeln sich mit den Werten der Grundeinstellung der Aufgabepunkte beim Streuen in der Ebene addieren oder verrechnen. Zusätzliche Maßnahmen der auf beiden Seiten gleichen Drehzahländerung der Streuscheiben bei der Hangauf- und Hangabwärtsfahrt und unterschiedliche Drehzahländerungen für die beiden Verteilerscheiben im Querhang können die Düngerverteilung weiter optimieren.

Die erfindungsgemäß vorgesehene Winkelmessung bzw. Lagebestimmung lässt sich mit Vorteil bei bekannten Zweischeibenstreuern mit einer Erfassung des Düngergewichts über Wiegezellen zur Korrektur des Gewichts am Quer- und Längshang nutzen.

## Patentansprüche

1. Verfahren zur gleichmäßigen Verteilung von Mineraldünger an Hanglagen mittels eines Zweischeibenstreuers mit gesteuerten Einrichtungen zur Änderung des Aufgabepunktes des Düngers auf die umlaufenden Verteilerscheiben, **dadurch gekennzeichnet, dass** gegenüber der düngersorten- und arbeitsbreitenabhängigen Einstellung des Aufgabepunktes beim Streuen in der Ebene bei der Hangaufwärts- und bei der Hangabwärtsfahrt die Aufgabepunkte rechts und links gleichsinnig verlagert werden und bei der Fahrt entlang des Hangs - der Querhangfahrt - die Aufgabepunkte rechts und links gegensinnig verlagert werden.

2. Verfahren nach Anspruch 1, **dadurch gekennzeichnet, dass** bei einem Zweischeibenstreuer mit einer Drehrichtung der Verteilerscheiben in der Mitte zwischen den Scheiben gegen die Fahrtrichtung die schwerkraftbedingte Verlagerung des Aufgabepunktes gegen die Drehrichtung der Verteilerscheiben und/oder nach außen in Richtung Scheibenumfang bei der Hangabwärtsfahrt durch die maschinengesteuerte Verlagerung der Aufgabepunkte gleichsinnig in Drehrichtung und/oder nach innen in Richtung Scheibenmitte ausgeglichen wird.

3. Verfahren nach Anspruch 1, **dadurch gekennzeichnet, dass** bei einem Zweischeibenstreuer mit einer Drehrichtung der Verteilerscheibe in der Mitte zwischen den Scheiben gegen die Fahrtrichtung die schwerkraftbedingte Verlagerung der Aufgabepunkte in Drehrichtung der Verteilerscheiben und/oder nach innen in Richtung Scheibenmitte bei der Hangaufwärtsfahrt durch die maschinengesteuerte Verlagerung der Aufgabepunkte gleichsinnig gegen die Drehrichtung und/oder nach außen in Richtung Scheibenumfang ausgeglichen wird.

4. Verfahren nach Anspruch 1, **dadurch gekennzeichnet, dass** bei einem Zweischeibenstreuer mit einer Drehrichtung der Verteilerscheiben in der Mitte der Scheiben gegen die Fahrtrichtung die schwerkraftbedingte Verlagerung der Aufgabepunkte bei der Querhangfahrt durch die maschinengesteuerte Verlagerung der Aufgabepunkte der beiden Seiten gegensinnig erfolgt und der Aufgabepunkt der hangoberen Seite in Drehrichtung und/oder nach innen in Richtung Scheibenmitte und der Aufgabepunkt der hangunteren Seite gegen die Drehrichtung und/oder nach außen in Richtung Scheibenumfang maschinengesteuert verlagert wird.

5. Verfahren nach Anspruch 1, **dadurch gekennzeichnet, dass** bei Zweischeibenstreuern mit einer Drehrichtung der Verteilerscheiben in der Mitte zwischen den Scheiben in Fahrtrichtung die Maßnahmen der Ansprüche 2 bis 4 zur Verlagerung der Aufgabepunkte in analoger Umkehrung vorgenommen werden.

6. Verfahren nach einem der Ansprüche 1 bis 5, **dadurch gekennzeichnet, dass** die Neigung des Hangs quer zur Fahrtrichtung mittels eines Winkelmessers messtechnisch erfasst wird.

7. Verfahren nach Anspruch 6, **dadurch gekennzeichnet, dass** in Abhängigkeit vom gemessenen Winkel quer zur Fahrtrichtung die beiden maschinengesteuerten Aufgabepunktverlagerungen entsprechend gegensinnig quantitativ verändert werden.

8. Verfahren nach einem der Ansprüche 1 bis 5, **dadurch gekennzeichnet, dass** die Neigung des Hangs in Fahrtrichtung mittels eines Winkelmessers messtechnisch erfasst wird.

9. Verfahren nach Anspruch 9, **dadurch gekennzeichnet, dass** in Abhängigkeit vom gemessenen Winkel in Fahrtrichtung die maschinengesteuerten Aufgabepunktverlagerungen entsprechend gleichsinnig quantitativ geändert werden.

10. Verfahren nach einem der Ansprüche 6 bis 9, **dadurch gekennzeichnet, dass** die maschinengesteuerten Aufgabepunktverlagerungen quer und in Fahrtrichtung abhängig von den jeweils gemessenen Winkeln sich mit den Werten der Grundeinstellung der Aufgabepunkte beim Streuen in der Ebene addieren bzw. verrechnen.

11. Verfahren nach einem der Ansprüche 1 bis 5, **dadurch gekennzeichnet, dass** die Lage der Maschine zur Ebene über Beschleunigungsmessung in den 3 Raumachsen oder einem Gyrosensor bestimmt wird und entsprechende maschinengesteuerte Aufgabepunktverlagerungen durchgeführt werden.

12. Verfahren nach einem der Ansprüche 1 bis 11, **dadurch gekennzeichnet, dass** zusätzliche Maßnahmen der Drehzahländerung der Streuscheiben vorgenommen werden, wobei diese bei Hangauf- und Hangabwärtsfahrt für beide Verteilerscheiben gleich und im Querhang verschieden sind.

13. Verfahren nach einem der Ansprüche 1 bis 10, **dadurch gekennzeichnet, dass** bei einem mit Wiegezellen ausgestatteten Zweischeibendüngerstreuer die Winkelmessung und/oder Beschleunigungsmessung und/oder Messung mittels eines Gyrosensors zugleich zur Korrektur des Düngergewichts am Quer- und Längshang genutzt wird.

## Claims

1. Method for the even distribution of mineral fertilizers on slopes by means of a two-disc spreader with controlled devices for changing the application point of the fertilizer onto the rotating distributor discs, **characterized in that**, compared to the fertilizer-type-dependent and working-width-dependent setting of the application point when spreading on a level surface, during travel up the slope and during travel down the slope the application points on the right and on the left are moved in the same direction, and when travelling along the slope - transverse travel on the slope - the application points on the right and on the left are moved in opposite directions.

2. Method according to Claim 1, **characterized in that** in the case of a two-disc spreader with a direction of rotation of the distributor discs in the centre between the discs in the opposite direction to the direction of travel the gravity-induced movement of the application point counter to the direction of rotation of the distributor discs and/or outwards in the direction of the circumference of the discs during travel down the slope is compensated by the machine-controlled movement of the application points in the same direction in the direction of rotation and/or inwards in the direction of the centre of the discs.

3. Method according to Claim 1, **characterized in that** in the case of a two-disc spreader with a direction of rotation of the distributor disc in the centre between the discs counter to the direction of travel, the gravity-induced movement of the application points in the direction of rotation of the distributor discs and/or inwards in the direction of the centre of the discs during travel down the slope is compensated by the machine-controlled movement of the application points in the same direction counter to the direction of rotation and/or outwards in the direction of the circumference of the discs.

4. Method according to Claim 1, **characterized in that** in the case of a two-disc spreader with a direction of rotation of the distributor discs in the centre of the discs counter to the direction of travel the gravity-induced movement of the application points during transverse travel on the slope takes place as a result of the machine-controlled movement of the application points of the two sides in opposite directions, and the application point of the side which is higher on the slope is moved in the direction of rotation and/or inwards in the direction of the centre of the discs, and the application point of the side which is lower on the slope is moved counter to the direction of rotation and/or outwards in the direction of the circumference of the discs, under machine control.

5. Method according to Claim 1, **characterized in that** in the case of two-disc spreaders with a direction of rotation of the distributor discs in the centre between the discs in the direction of travel the measures in Claims 2 to 4 for moving the application points are performed in an analogous reversal.

6. Method according to one of Claims 1 to 5, **characterized in that** the inclination of the slope is sensed by measuring equipment transversally with respect to the direction of travel by means of an angle-measuring device.

7. Method according to Claim 6, **characterized in that** the two machine-controlled application point movements are correspondingly changed quantitatively in opposite directions as a function of the measured angle transversally with respect to the direction of travel.

8. Method according to one of Claims 1 to 5, **characterized in that** the inclination of the slope is sensed by measuring equipment in the direction of travel by means of an angle-measuring device.

9. Method according to Claim 9, **characterized in that** the machine-controlled application point movements are correspondingly changed quantitatively in the same direction as a function of the measured angle in the direction of travel.

10. Method according to one of Claims 6 to 9, **characterized in that** the machine-controlled application point movements transversally and in the direction of travel are added or calculated as a function of the respectively measured angles to the values of the basic setting of the application points during spreading on the level surface.

11. Method according to one of Claims 1 to 5, **characterized in that** the position of the machine with respect to the level surface is determined by means of acceleration measurement in the three spatial axes or a gyro sensor, and corresponding machine-controlled application point movements are carried out.

12. Method according to one of Claims 1 to 11, **characterized in that** additional measures of the change in the rotational speed of the spreading discs are performed, wherein these are the same for both distributor discs when travelling up and down the slope and are different on the transverse slope.

13. Method according to one of Claims 1 to 10, **characterized in that** in the case of a two-disc fertilizer spreader which is equipped with weighing cells, the angular measurement and/or acceleration measurement and/or measurement by means of a gyro sensor at the same time as the correction of the fertilizer weight on the transverse slope and longitudinal slope are/is used.

## Revendications

1. Procédé de répartition uniforme d'engrais minéraux sur des coteaux à l'aide d'un épandeur à deux disques doté de dispositifs commandés servant à modifier le point de dispersion de l'engrais sur les disques en rotation du répartiteur, **caractérisé en ce que** les points de dispersion sont transférés dans le même sens à droite et à gauche par rapport au justage dépendant du type d'engrais et de la largeur de travail du point de dispersion lors de l'épandage dans le plan lors d'une avancée en montée et en descente, et qu'en situation d'avancée le long de la colline - en avancée transversale - les points de dispersion sont transférés dans le sens contraire à droite et à gauche.

2. Procédé selon la revendication 1, **caractérisé en ce qu'**en présence d'un épandeur à deux disques présentant une direction de rotation des disques de répartiteur placée au centre entre les disques dans le sens contraire de la direction de conduite, le décalage du point de dispersion provoqué par la pesanteur, dans le sens contraire de la direction de rotation des disques de répartiteur et/ou vers l'extérieur en direction de la périphérie des disques, est compensé lors de la conduite dans le sens de descente de la colline par le décalage commandé automatiquement des points de dispersion dans le même sens que la direction de rotation et/ou vers l'intérieur en direction du centre du disque.

3. Procédé selon la revendication 1, **caractérisé en ce qu'**en présence d'un épandeur à deux disques avec une direction de rotation du disque de répartiteur placée au centre entre les disques dans le sens contraire de la direction de conduite, le décalage provoqué par la pesanteur des points de dispersion, dans la direction de rotation des disques de répartiteur et/ou vers l'intérieur en direction du centre du disque en présence d'une conduite dans le sens de montée de la colline, est compensé par le décalage commandé automatiquement des points de dispersion dans le même sens, dans le sens contraire de la direction de rotation et/ou vers l'extérieur en direction de la périphérie des disques.

4. Procédé selon la revendication 1, **caractérisé en ce qu'**en présence d'un épandeur à deux disques avec une direction de rotation des disques de répartiteur placée au centre des disques dans le sens contraire de la direction de conduite, le décalage provoqué par la pesanteur des points de dispersion en cas de conduite transversalement à la colline se produit dans le sens contraire, par le décalage commandé automatiquement des points de dispersion des deux côtés et que le point de dispersion du côté amont de la colline est décalé de façon commandée automatiquement dans la direction de rotation et/ou vers l'intérieur en direction du centre du disque et que le point de dispersion du côté aval de la colline est décalé de façon commandée automatiquement dans le sens contraire de la direction de rotation et/ou vers l'extérieur en direction de la périphérie des disques.

5. Procédé selon la revendication 1, **caractérisé en ce qu'**en présence d'épandeurs à deux disques avec une direction de rotation des disques de répartiteur placée au centre entre les disques, dans la direction d'avancée, les mesures proposées dans les revendications 2 à 4 en vue de décaler les points de dispersion sont effectuées dans le sens inverse.

6. Procédé selon l'une quelconque des revendications 1 à 5, **caractérisé en ce que** la pente de la colline est déterminée, par le biais d'une technique de mesure, transversalement à la direction d'avancée à l'aide d'un système de mesure d'angle.

7. Procédé selon la revendication 6, **caractérisé en ce que** les deux décalages du point de dispersion commandés automatiquement sont modifiés dans le sens contraire sur le plan quantitatif en fonction de l'angle mesuré transversalement à la direction d'avancée.

8. Procédé selon l'une quelconque des revendications 1 à 5, **caractérisé en ce que** la pente de la colline est déterminée, par le biais d'une technique de mesure, dans la direction d'avancée à l'aide d'un système de mesure d'angle.

9. Procédé selon la revendication 9, **caractérisé en ce que** les décalages du point de dispersion commandés automatiquement sont modifiés de façon quantitative dans le même sens en fonction de l'angle mesuré dans la direction d'avancée.

10. Procédé selon l'une quelconque des revendications 6 à 9, **caractérisé en ce que** les décalages du point de dispersion commandés automatiquement s'ajoutent et/ou se soustraient, transversalement et dans la direction d'avancée, en fonction des angles respectivement mesurés, aux valeurs du réglage de base des points de dispersion, lors de l'épandage dans le plan.

11. Procédé selon l'une quelconque des revendications 1 à 5, **caractérisé en ce que** la position de la machine par rapport au plan est déterminée par le biais d'une mesure d'accélération dans les 3 directions spatiales ou à l'aide d'un capteur gyroscopique et que les décalages correspondants du point de dispersion commandés automatiquement sont réalisés sur cette base.

12. Procédé selon l'une quelconque des revendications 1 à 11, **caractérisé en ce que** des mesures supplémentaires de la variation de la vitesse de rotation des disques d'épandage sont réalisées, celles-ci étant identiques pour les deux disques de répartiteur en présence d'une conduite dans le sens de descente ou de montée de la colline et différentes pour une conduite transversalement à la colline.

13. Procédé selon l'une quelconque des revendications 1 à 10, **caractérisé en ce qu'**en présence d'un épandeur d'engrais à deux disques équipé de cellules de pesée, la mesure angulaire et/ou la mesure d'accélération et/ou la mesure à l'aide d'un capteur gyroscopique sont utilisées simultanément pour corriger le poids d'engrais épandu transversalement et longitudinalement par rapport à la colline.
